Europäisches Patentamt

European Patent Office

Office européen des brevets

(11) Publication number: **0 097 482**
**B1**

## EUROPEAN PATENT SPECIFICATION

(45) Date of publication of patent specification: **29.10.86**

(21) Application number: **83303429.1**

(22) Date of filing: **14.06.83**

(51) Int. Cl.⁴: **F 27 D 3/02,** F 27 D 1/00,
F 27 B 9/22

(54) Refractory coverings for application to fluid conveying members.

(30) Priority: **18.06.82 US 389722**

(43) Date of publication of application:
**04.01.84 Bulletin 84/01**

(45) Publication of the grant of the patent:
**29.10.86 Bulletin 86/44**

(84) Designated Contracting States:
**DE FR GB**

(56) References cited:
FR-A-2 402 634
GB-A-1 496 340
GB-A-2 060 847
US-A-4 095 937
US-A-4 106 528

(73) Proprietor: THE BABCOCK & WILCOX
COMPANY
1010 Common Street P.O. Box 60035
New Orleans Louisiana 70160 (US)

(72) Inventor: Orcutt, Donald R.
5720 B Dutchmill Court
Hanover Park Illinois 60103 (US)

(74) Representative: Cotter, Ivan John et al
D. YOUNG & CO. 10 Staple Inn
London WC1V 7RD (GB)

Courier Press, Leamington Spa, England.

## Description

This invention relates to refractory coverings for application to fluid conveying members, for example water cooled members forming structural portions of a furnace and, by way of a more particular example, water cooled pipes in reheat furnaces.

In the preparation of steel billets, slabs and other metal workpieces for further shaping or forming, it is customary to subject the workpieces to direct heating while passing them through a furnace. The billets move through the furnace on skid rails which are supported from below by horizontal and vertical water cooled tubular support members. With this construction, fuel may be burned both above and below the skid rails so that the billets or other workpieces may be uniformly heated from all sides.

In the continuous furnace of the type described, the billets or workpieces are generally heated to a temperature in the region of 1100°C (2000°F). Therefore, the above-mentioned rails and the support tubes must be protected by sufficient insulating material to minimise the heat lost to the water cooled tubes and, further, to minimise erosion and corrosion of the tubes resulting from the high temperature and oxidisation environment encountered in the furnace.

In the past, it has been recognised as desirable to insulate these water cooled members by fibrous systems. These systems consisted of a lining or covering of fibrous insulating material applied over the pipes, as shown in US Patents Nos. 3 226 101 (Balaz et al.) and 4 095 937 (Colburn et al.). However, these systems proved unsatisfactory due to vulnerability to wet scale attach. Other systems utilised ceramic tiles which were assembled in encircling relationship to the water cooled support members or pipes, or a combination of a fibrous inner layer and interlocking ceramic tiles making up the outer layer as shown in US Patent No. 3 881 864 (Nicol). This system proved more reliable in resisting wet scale attack but was subject to vibration and thermal shock problems which reduced the life of the protective system. In general, however, it had been found that the combination of both fibrous insulation and ceramic tiles covering the fibrous insulation provide the best protection from corrosion caused by furnace gases for the water cooled members. That is, the fibrous insulation thermally insulates the members, and the outer covering of ceramic refractory tiles protects the fibrous insulation from the deleterious effects of the furnace gases. In this combination of insulation and ceramic tiles, the encircling ceramic tiles are subjected to intense vibrational loadings caused by movement of the billets on the skid rail and large thermal stresses as a result of temperature gradients which may cause cracking of the tiles. The internal stresses are more pronounced in the vicinity of engagement means employed to interlock adjacent tiles or members. In general, the aforementioned engagement means consists of a metallic stud welded to the tubular support member and for interlocking lug members formed in the ceramic tiles, such as shown in US Patent No. 2 436 452 (Schmidt). Furthermore, the complex arrangement generally employed in holding the ceramic tile members together about the tubular support member renders replacement of a single ceramic section quite difficult.

Thereafter, a covering was developed which insulated the tubular members, which protected the insulation from the furnace gases, and minimised the magnitude of internal stress imposed thereon. This covering consists of a thermal insulating layer of ceramic fibre wrapped around the fluid conveying tubular member, an inner ceramic refractory layer of split tiles and an outer layer of ceramic refractory tile forming a unitary collar, as shown in US Patent No. 4 015 636 (Van Fossen). However, the high density of this covering system renders it vulnerable to intense vibrational loading.

A preferred form of refractory covering embodying the invention and described hereinbelow, which covering is applied to water cooled members in a furnace, has good thermal insulating properties, is resistant to scale attack and internal stresses and has a low density in order to avoid vibrational loading stresses caused by movement of billets on skid rails in the furnace.

According to the invention there is provided a refractory covering for application to a fluid conveying member, the covering comprising a thermally insulating ceramic fibre blanket layer disposed about and contacting the member and a veneering mortar layer applied thereover, the covering being characterised by the provision of an intermediate open weave cloth of thermally insulating fibres wrapped around the fibre blanket and which is impregnated by the mortar.

Also in accordance with the invention there is provided a method of insulating a pipe for conveying fluid in a furnace, which comprises applying to the pipe a blanket of thermal insulating fibres and applying over said blanket a veneering mortar layer, characterised in that, prior to the application of said mortar, an open weave cloth of thermal insulating fibres is wrapped around said blanket, whereby, upon application of said mortar layer, the mortar penetrates through the cloth layer into the blanket of thermal insulating fibres.

In accordance with a preferred embodiment of the present invention the refractory covering comprises the thermally insulating ceramic blanket layer disposed about and contacting the member, the cloth (e.g. of ceramic or fibreglass) wrapped about the blanket, the veneering mortar layer applied to the cloth, a layer of rings or strips or the like of a ceramic fibre material disposed about and contacting the veneering mortar, and a hot face veneering coating layer applied to the ceramic fibre material.

Specifically, a preferred form of low density refractory covering for water cooled furnace members includes a thermal insulation material such as a ceramic fibre blanket wrapped around the member to be insulated. Ceramic fibre cloth woven in an open weave ("fish net") is wrapped about the thermal insulation blanket in order to hold it onto the insulated member. The weave is desirably such that it allows penetration of the cloth by an alumina-silica high temperature fibre veneering mortar. The mortar is generally sprayed or trowelled onto the cloth, and thereafter penetrates into the ceramic fibre blanket. Rings of ceramic fibre material are placed atop the unset mortar. These rings are wrapped in a compressed relationship with respect to each other so as to take into consideration any shrinkage which may occur. Alternatively, strips of ceramic fibre blanket can be spirally wrapped around the veneering mortar. The rings or strips of ceramic fibre are applied before the veneering mortar has set, whereby the rings or strips are held in place by adhesion to the mortar while a final hot face veneering coating is applied. The hot face coating may have a high alumina content, the composition being designed for use with the particular ceramic fibre material chosen to be used as rings or strips. It is important that this coating is compatible with the ceramic fibre because shrinkage of the fibres during heating would cause the coating to flake off.

The invention will now be further described, by way of illustrative and non-limiting example, with reference to the accompanying drawings, in which:

Figure 1 is a perspective view of a portion of a furnace including water cooled pipe structures which are protected by refractory coverings embodying the present invention;

Figure 2 is a side view of a refractory covering constituting a preferred embodiment of the present invention;

Figure 3 is a sectional view of Figure 2; and

Figure 4 is a sectional view of a refractory covering constituting a preferred embodiment of the invention when applied to skid members.

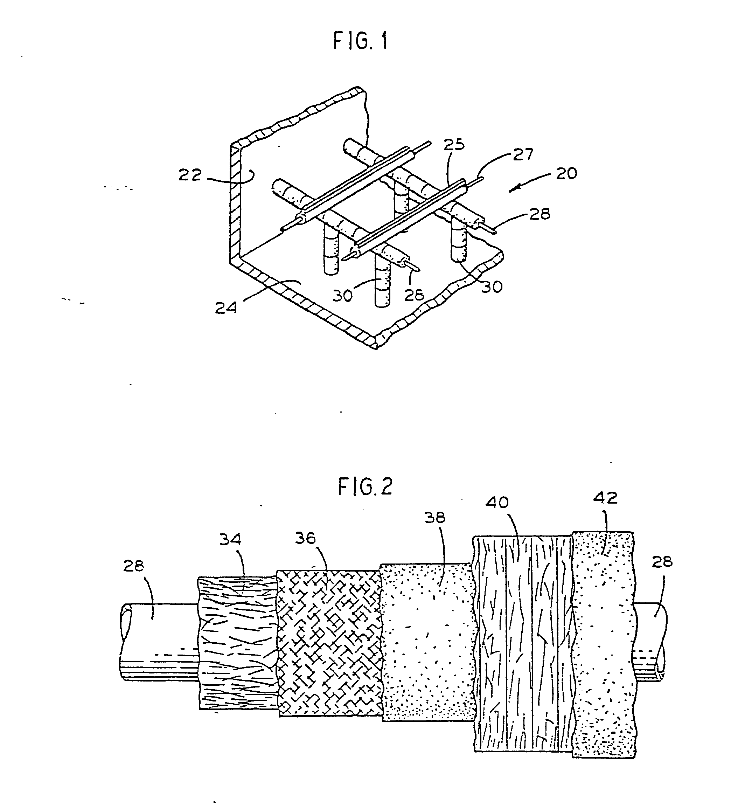

Figure 1 shows a reheat furnace 20 having a side wall 22 and a floor 24. Skid rails 25 are directly mounted upon generally horizontally extending water cooled tubes or members 27, which are in turn supported by transverse (crossover) and vertically extending water cooled support tubes, pipes or members 28 and 30. In the construction shown, remaining side and end walls and a roof of the furnace 20 are not illustrated since such construction is common in the art. Moreover, it will be understood that heat is applied to the furnace in a customary manner either by fuel combustion or by other heating means.

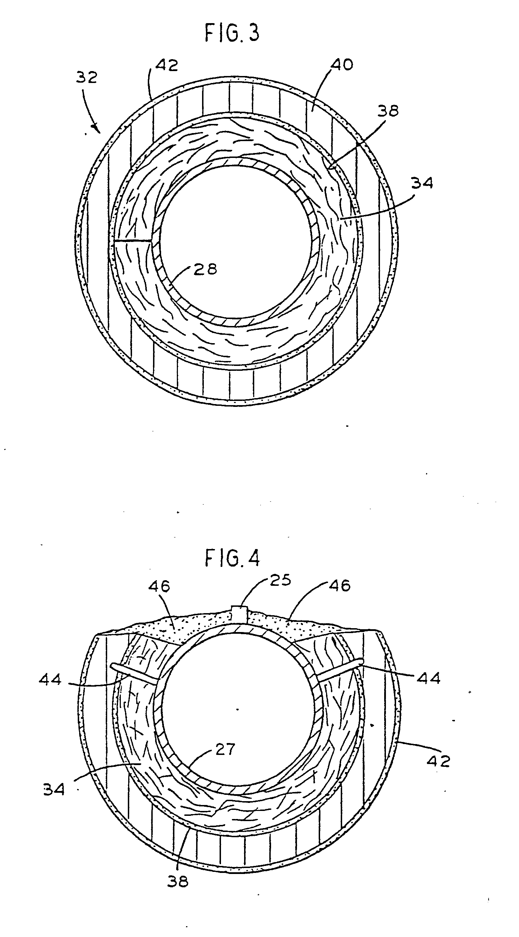

One form of the ceramic refractory fibre covering 32 embodying the present invention is illustrated in Figures 2 and 3 in connection with a horizontal water cooled support member, namely a crossover pipe 28. As shown, the crossover pipe 28 is covered with a layer of fibrous thermal insulation ceramic blanket 34, which typically has a thickness of about 6 mm to 63 mm (0.25 to 2.5 inches). Thereafter, a ceramic or fibreglass cloth 36 (not shown in Figures 3 and 4) is wrapped around the ceramic blanket 34 to hold the blanket in place. The ceramic cloth 36 is of an open weave type so that it will freely accept a veneering mortar or cement coating 38 applied to it. The veneering mortar 38 used is an alumina-silica, high temperature fibre veneering mortar of either an air or chemical setting type, capable of setting at ambient temperature. The veneering mortar 38 can be sprayed or trowelled onto the cloth 36, and thereafter penetrates into the fibres of the ceramic blanket 34. The ceramic blanket 34 and the cloth 36 provide a base for the veneering mortar 38 to adhere to. The mortar 38 provides a surface for rings or strips of ceramic blanket 40 to be mortared thereto. The ceramic blanket rings or strips 40 are preferably constructed of a light weight, high temperature ceramic fibre material. The rings 40 are compressed together width-wise along the perimeter of the mortar 38 so that no gaps will appear when shrinkage occurs during furnace heat-up. However, the rings or strips 40 can be replaced by ceramic fibrous ropes which are helically wrapped about the mortar 38. A hot faced veneering coating 42 having a high alumina or chromium content is applied to the rings 40. The coating 42 can be either air of chemically setting. It is important to use a coating 42 which is compatible with the ceramic fibre material making up the rings 40 in terms of shrinkage and adhesion of the coating to the fibres. Problems will occur if the coating 42 is improperly chosen, i.e. either the coating will crack off due to its inability to shrink along with the fibrous material or it will fail to adhere to the fibres or it may chemically react with the fibres.

It is envisioned that a satisfactory refractory covering comprising the ceramic blanket 34, the cloth 36, and the veneering mortar 38 can be used in cooler sections of the reheat furnace 20. This refractory covering is especially useful in those areas where there is little chance of wet scale attack and where the gas jet velocity is low.

More particularly, a ceramic fibre blanket 34 (e.g. of KAOWOOL, an alumina-silica ceramic fibre blanket made by The Babcock & Wilcox Company) having a thickness of 25 to 38 mm (1.0 to 1.5 inches) is wrapped around a crossover or upright pipe, 28 or 30 respectively, to be insulated. In order to retain the blanket 34 in place to complete the refractory insulation covering of the pipe, a ceramic fibre cloth 36 (e.g. of NEXTEL, which is a trademark of the Minnesota Manufacturing and Mining Corporation), is wrapped around the ceramic blanket 34. The cloth 36, because of its open weave design, allows penetration of a veneering cement 38 through to the ceramic blanket 34. The veneering cement 38 should be a high quality alumina-silica high temperature fibre veneering mortar, e.g. UNISTIK A or SMOOTHSET (both trademarks of The Babcock & Wilcox Company) or FREEPORT 3000 (sold by Freeport Brick Company). However, any mortar which is dimensionally and chemically compatible with the cloth 36 and the fibre rings 40, such as a sodium silicate bonded mortar or a phosphate bonded mortar, can be used. The veneering cement 38 is typically sprayed on to a thickness of about 3 to 6 mm (1/8 to 1/4 inches). Thereafter, rings or strips 40 of ceramic fibre blanket are added. It is preferable to use 50 mm (2 inch) wide rings, 25 to 50 mm (1.0 to 2.0 inches) thick (radially), though the longitudinal width can be varied from 2.5 to 75 mm (1 to 3 inches) to suit particular installation requirements. It is desirable to apply the rings, strips or rope so that they are under compression with respect to the adjacent rings, strips or rope. For example, strips totalling 380 mm (15 inches) in longitudinal width are used to cover 305 mm (12 inches) of pipe length. In order to protect the whole system from scale attack and the hostile furnace environment created by the furnace gases, a final hot face surface coating 42, having a thickness of 1.6 to 3.2 mm (1/16 to 1/8 inches), is applied, the coating 42 comprising for example UNIKOTE-S veneering cement (a trademark of The Babcock & Wilcox Company).

The covering 32, as applicable to skid pipes 27, is shown in Figure 4. The skid pipe 27 has metallic anchors 44 attached thereto by a standard stud gun. The anchors 44 are of such a length that they are completely insulated from the furnace environment by the coating 32. The ceramic blanket 34 and ceramic cloth 36 are impaled over the anchors 44 to provide the necessary structural strength to support the fibrous insulation covering since the covering cannot completely surround the skid pipe 27. Thereafter, as with the crossover and upright pipes, 28 and 30, respectively, the inner veneering mortar 38 is applied. Compressed strips 40 of ceramic fibre are then wrapped about the veneering mortar 38. As outlined above, the strips 40 are in a compressed state in relation to the adjacent strips in order to avoid any voids or gaps caused by shrinkage of the fibrous material during heat up. The hot face layer of veneering coating 42 is then applied to the exposed surface area of the strips 40. A refractory mortar 46 is used to fill in gaps which occur on either side of the skid rail 25, for which purpose the veneering mortar 38 generally is used.

**Claims**

1. A refractory covered fluid conveying member wherein the refractory covering comprises a thermal insulating ceramic fibre layer (34) wrapped around and in contact with the fluid conveying member (27, 28), an intermediate thermal insulating layer (36) wrapped around the ceramic fibre layer (34) and holding the same in place, and a veneering mortar layer (38) applied over said intermediate thermal insulating layer, characterised in that the intermediate thermal insulating layer (36) is in the form of an open weave cloth of thermal insulating fibres wrapped around the ceramic fibre layer (34) and permitting the impregnation of both said intermediate layer (36) and said ceramic fibre layer (34) by said mortar.

2. A refractory covered fluid conveying member according to claim 1, characterised by a further layer of ceramic fibre material (40) disposed about and contacting the veneering mortar (38) and a hot face veneering coating layer (42) applied to the further layer of ceramic fibre material (40).

3. A refractory covered fluid conveying member according to claim 2, characterised in that said further layer of ceramic fibre material (40) is in the form of rings.

4. A refractory covered fluid conveying member according to claim 2, characterised in that said further layer of ceramic fibre material (40) is applied in helically wrapped strips.

5. A refractory covered fluid conveying member according to claim 2, characterised in that said further layer of ceramic fibre material (40) is in rope form.

6. A refractory covered fluid conveying member according to any one of claims 3 to 5, wherein said rings, or the individual turns of said helically wrapped strips, or said rope are in axial compression one against the other.

7. A refractory covered fluid conveying member according to any one of claims 2 to 5, characterised in that the veneering coating layer (42) has a high alumina content.

8. A refractory covered fluid conveying member according to any one of claims 2 to 5, characterised in that the veneering coating layer (42) has a high chrome content.

9. A refractory covered fluid conveying member according to any one of the preceding claims, characterised in that the thermally insulating ceramic fibre layer (34) is from 6 mm to 63 mm (0.25 to 2.5 inches) in radial thickness.

10. A refractory covered fluid conveying member according to any one of claims 1 to 8, characterised in that the intermediate thermal insulating layer (36) is an open weave cloth of ceramic fibres.

11. A refractory covered fluid conveying member according to any one of claims 1 to 8, characterised in that the intermediate thermal insulating layer (36) is an open weave cloth of glass fibres.

12. A refractory covered fluid conveying member according to any one of the preceding claims, characterised in that the veneering mortar (38) is alumina-silica, air-setting, high temperature veneering mortar.

13. A refractory covered fluid conveying member according to any one of claims 2—12, which is in the form of a skid pipe for a furnace, said member comprising a tubular pipe (27) having a skid rail (25) attached thereto and extending longitudinally along the surface thereof, the said insulating and mortar layers (34, 36, 38, 40, 42) leaving the rail exposed with the gaps on either side thereof being filled by a refractory mortar filling (46).

14. A refractory covered fluid conveying member according to claim 13, characterised in that the refractory covering is anchored to the fluid conveying member (27) by anchoring elements (44) extending radially from the fluid conveying member (27) through the thickness of the ceramic fibre layer (34), the intermediate layer (36) and the veneering mortar layer (38).

15. A method of insulating a pipe for conveying fluid in a f e for conveying fluid in a furnace, which comprises applying to the pipe (27, 28) a blanket (34) of thermal insulating fibres and applying over said blanket a veneering mortar layer (38), characterised in that, prior to the application of said mortar, an open weave cloth (36) of thermal insulating fibres is wrapped around said blanket (34), whereby, upon application of said mortar layer (38), the mortar penetrates through the cloth layer (36) into the blanket (34) of thermal insulating fibres.

16. A method according to claim 15, characterised in that, whilst said mortar layer (38) is still wet, there is applied thereto a further layer (40) of thermal insulating fibres and over which there is then applied a second mortar layer to provide a hot face veneering coating layer (42) as the external surface of the insulated pipe.

17. A method according to claim 15 or 16, characterised in that the open weave cloth (36) is in the form of rings which are placed around the pipe and over the thermal insulating fibre blanket (34), or in the form of strips or a rope helically wrapped around said blanket (34), the rings or the individual turns of said helically wrapped strips or rope being placed around the blanket in axial compression one against the other.

18. A method according to claim 16 or 17, characterised in that said pipe (27) is a skid pipe having a skid rail (25) attached longitudinally to the surface thereof and which is left exposed by the insulation that is applied to the rest of the pipe, the gaps on either side of the rail (25) and the insulation being filled in with refractory mortar (46).

19. A method according to claim 18, characterised in that said pipe (27) is provided with one or more anchoring elements (44) extending radially therefrom which penetrate the thermal insulating fibrous blanket (34) and said open weave cloth as they are wrapped therearound, thereby to anchor the blanket and the cloth to the pipe.

**Patentansprüche**

1. Hitzebeständig beschichtete Fließmittelfördereinrichtung, bei der die hitzebeständige Beschichtung eine wärmeisolierende Schicht keramischer Fasern (34), die um die Fließmittelfördereinrichtung (27, 28) und in Berührung mit ihr gewickelt ist, eine mittlere wärmeisolierende Schicht (36), die um die Keramikfaserschicht (34) gewickelt ist und dieselbe an ihrer Stelle hält, und eine bedeckende Mörtelschicht (38), die über der mittleren wärmeisolierenden Schicht aufgebracht ist, umfaßt, dadurch gekennzeichnet, daß die mittlere wärmeisolierende Schicht (36) in der Form einer offenen Gewebebahn aus wärmeisolierenden Fasern, die um die Keramikfaserschicht (34) gewickelt ist und die Imprägnierung der mittleren Schicht (36) und der Keramikfaserschicht (34) durch diesen Mörtel gestattet, vorliegt.

2. Hitzebeständig beschichtete Fließmittelfördereinrichtung nach Anspruch 1, gekennzeichnet durch eine weitere Schicht von Keramikfasermaterial (40), die um die bedeckende Schicht (38) und in Berührung mit dieser angeordnet ist, und eine Heißaußenflächenüberzugsschicht (42), die auf der weiteren Schicht von Keramikfasermaterial (40) aufgebracht ist.

3. Hitzebeständig beschichtete Fließmittelfördereinrichtung nach Anspruch 2, dadurch gekennzeichnet, daß die weitere Schicht von Keramikfasermaterial (40) in der Form von Ringen vorliegt.

4. Hitzebeständig beschichtete Fließmittelfördereinrichtung nach Anspruch 2, dadurch gekennzeichnet, daß die weitere Schicht von Keramikfasermaterial (40) in spiralförmig aufgewickelten Streifen aufgebracht ist.

5. Hitzebeständig beschichtete Fließmittelfördereinrichtung nach Anspruch 2, dadurch gekennzeichnet, daß die weitere Schicht von Keramikfasermaterial (40) in Strangform vorliegt.

6. Hitzebeständig beschichtete Fließmittelfördereinrichtung nach einem der Ansprüche 3 bis 5, bei der die Ringe oder die einzelnen Wicklungen der spiralförmig aufgewickelten Streifen oder der Strang axial gegeneinander gepreßt sind.

7. Hitzebeständig beschichtete Fließmittelfördereinrichtung nach einem der Ansprüche 2 bis 5, dadurch gekennzeichnet, daß die Außenüberzugsschicht (42) einen hohen Aluminiumoxidgehalt besitzt.

8. Hitzebeständig beschichtete Fließmittelfördereinrichtung nach einem der Ansprüche 2 bis 5, dadurch gekennzeichnet, daß die Außenüberzugsschicht (42) einen hohen Chromgehalt besitzt.

9. Hitzebeständig beschichtete Fließmittelfördereinrichtung nach einem der vorausgehenden Ansprüche, dadurch gekennzeichnet, daß die wärmeisolierende Keramikfaserschicht (34) eine radiale Dicke von 6 mm bis 63 mm (0,25 bis 2,5 inch) hat.

10. Hitzebeständig beschichtete Fließmittelfördereinrichtung nach einem der Ansprüche 1 bis 8, dadurch gekennzeichnet, daß die mittlere wärmeisolierende Schicht (36) eine offene Gewebebahn von Keramikfasern ist.

11. Hitzebeständig beschichtete Fließmittelfördereinrichtung nach einem der Ansprüche 1 bis 8, dadurch gekennzeichnet, daß die mittlere wärmeisolierende Schicht (36) eine offene Gewebebahn von Glasfasern ist.

12. Hitzebeständig beschichtete Fließmittelfördereinrichtung nach einem der vorausgehenden Ansprüche, dadurch gekennzeichnet, daß der bedeckende Mörtel (38) ein an Luft abbindender Tonerde-Kieselsäure-Hochtemperaturbedeckungsmörtel ist.

13. Hitzebeständig beschichtete Fließmittelfördereinrichtung nach einem der Ansprüche 2 bis 12, die in der Form einer Rutschleitung für einen Ofen vorliegt, wobei die Einrichtung eine Rohrleitung (27) mit einer daran befestigten und sich längs entlang seiner Oberfläche erstreckenden Gleitschiene aufweist, wobei die Isolier- und Mörtelschicht (34, 36, 38, 40, 42) die Schiene freiliegen läßt, wobei die Zwischenräume auf beiden Seiten desselben mit einer hitzebeständigen Mörtelfüllung (46) gefüllt sind.

14. Hitzebeständig beschichtete Fließmittelfördereinrichtung nach Anspruch 13, dadurch gekennzeichnet, daß die hitzebeständige Beschichtung an der Fließmittelfördereinrichtung (27) durch Verankerungselemente (44) verankert sind, die sich radial von der Fließmittelfördereinrichtung (27) aus durch die Dicke der Keramikfaserschicht (34), der Zwischenschicht (36) und der bedeckenden Mörtelschicht (38) erstrecken.

15. Verfahren zur Isolierung einer Leitung zur Förderung von Fließmittel in einem Ofen durch Aufbringung eines Überzugs (34) aus wärmeisolierenden Fasern auf der Leitung (27, 28) und Aufbringung einer bedeckenden Mörtelschicht (38) über diesem Überzug, dadurch gekennzeichnet, daß vor der Aufbringung des Mörtels eine offene Gewebebahn (36) aus wärmeisolierenden Fasern um den Überzug (34) gewickelt wird, wobei bei Aufbringung der Mörtelschicht (38) der Mörtel durch die Gewebeschicht (36) in den Überzug (34) aus wärmeisolierenden Fasern eindringt.

16. Verfahren nach Anspruch 15, dadurch gekennzeichnet, daß während die Mörtelschicht (38) noch feucht ist, auf ihr eine weiere Schicht (40) aus wärmeisolierenden Fasern aufgebracht wird, über welcher dann eine zweite Mörtelschicht aufgebracht wird, um eine Heißverkleidungs-Außenüberzugsschicht (42) als die Außenfläche der isolierten Leitung zu bekommen.

17. Verfahren nach Anspruch 15 oder 16, dadurch gekennzeichnet, daß die offene Gewebebahn (36) in der Form von Ringen, die um die Leitung herum und über den wärmeisolierenden Faserüberzug (34) angeordnet sind, oder in der Form von spiralförmig um den Überzug (34) gewickelten Streifen oder einem solchen Strang vorliegt, wobei die Ringe oder die einzelnen Windungen der spiralförmig aufgewickelten Streifen oder des Stranges um den Überzug axial gegeneinander gepreßt angeordnet sind.

18. Verfahren nach Anspruch 16 oder 17, dadurch gekennzeichnet, daß die Leitung (27) eine Rutschleitung mit einer Gleitschiene (25), die längs an ihrer Oberfläche befestigt ist und die von der Isolierung, die auf dem Rest der Leitung aufgebracht ist, freigelassen ist, ist, wobei die Zwischenräume auf beiden Seiten der Schiene (25) zwischen dieser und der Isolierung mit hitzebeständigem Mörtel (46) gefüllt sind.

19. Verfahren nach Anspruch 18, dadurch gekennzeichnet, daß die Leitung (27) mit einem oder mehreren Verankerungselementen (44) versehen ist, die sich radial von ihr aus erstrecken und den wärmeisolierenden Faserüberzug (34) und die offene Gewebebahn, wenn diese aufgewickelt werden, durchdringen, so daß der Überzug und die Gewebebahn auf der Leitung verankert werden.

**Revendications**

1. Elément transporteur de fluide recouvert de réfractaire dans lequel l'habillage réfractaire comprend une couche fibreuse céramique d'isolation thermique (34) enroulée autour de, et en contact avec, l'élément transporteur de fluide (27, 28), une couche d'isolation thermique intermédiaire (36) enroulée autour de la couche fibreuse céramique (34) et la maintenant en place, et une couche de mortier de placage (38) appliquée par-dessus ladite couche d'isolation thermique intermédiaire, caractérisé en ce que la couche d'isolation thermique intermédiaire (36) se présente sous la forme d'un tissu à armure ajourée de fibres d'isolation thermique enroulé autour de la couche fibreuse céramique (34) et permettant l'imprégnation tant de ladite couche intermédiaire (36) que de ladite couche fibreuse céramique (34) par ledit mortier.

2. Elément transporteur de fluide recouvert de réfractaire selon la revendication 1, caractérisé par une couche supplémentaire de matériau fibreux céramique (40) disposée autour et au contact du mortier de placage (38) et une couche de revêtement de placage de face chaude (42) appliquée sur la couche supplémentaire de matériau fibreux céramique (40).

3. Elément transporteur de fluide recouvert de réfractaire selon la revendication 2, caractérisé en ce que ladite couche supplémentaire de matériau fibreux céramique (40) se présente sous la forme d'anneaux.

4. Elément transporteur de fluide recouvert de réfractaire selon la revendication 2, caractérisé en ce que ladite couche supplémentaire de matériau fibreux céramique (40) est appliquée en bandes enroulées en hélice.

5. Elément transporteur de fluide recouvert de réfractaire selon la revendication 2, caractérisé en ce que ladite couche supplémentaire de matériau fibreux céramique (40) se présente sous la forme de corde.

6. Elément transporteur de fluide recouvert de réfractaire selon l'une quelconque des revendications 3 à 5, dans lequel lesdits anneaux, ou les spires individuelles desdites bandes enroulées en hélice ou de ladite corde portent sous compression axiale les unes contre les autres.

7. Elément transporteur de fluide recouvert de réfractaire selon l'une quelconque des revendications 2 à 5, caractérisé en ce que la couche de revêtement de placage (42) a une haute teneur en alumine.

8. Elément transporteur de fluide recouvert de réfractaire selon l'une quelconque des revendications 2 à 5, caractérisé en ce que la couche de revêtement de placage (42) a une haute teneur en chrome.

9. Elément transporteur de fluide recouvert de réfractaire selon l'une quelconque des revendications précédentes, caractérisé en ce que la couche fibreuse céramique d'isolation thermique (34) a 6 à 63 mm (0,25 à 2,5 pouces) d'épaisseur radiale.

10. Elément transporteur de fluide recouvert de réfractaire selon l'une quelconque des revendications 1 à 8, caractérisé en ce que la couche d'isolation thermique intermédiaire (36) est un tissu à armure ajourée en fibre céramique.

11. Elément transporteur de fluide recouvert de réfractaire selon l'une quelconque des revendications 1 à 8, caractérisé en ce que la couche d'isolation thermique intermédiaire (36) est un tissu à armure ajourée de fibres de verre.

12. Elément transporteur de fluide recouvert de réfractaire selon l'une quelconque des revendications précédentes, caractérisé en ce que le mortier de placage (38) est un mortier de placage réfractaire, à prise à l'air, d'alumine-silice.

13. Elément transporteur de fluide recouvert de réfractaire selon l'une quelconque des revendications 2 à 12, qui se présente sous la forme d'un tuyau-glissière pour four, ledit élément comprenant un tuyau tubulaire (27) auquel est fixé une glissière (25) s'étendant longitudinalement le long de sa surface, lesdites couches d'isolation et de mortier (34, 36, 38, 40, 42) laissant la glissière exposée avec remplissage des brèches les flanquant par une charge de mortier réfractaire (46).

14. Elément transporteur de fluide recouvert de réfractaire selon la revendication 13, caractérisé en ce que l'habillage réfractaire est ancré sur l'élément transporteur de fluide (27) par des éléments d'ancrage (44) s'étendant radialement à partir de l'élément transporteur de fluide (27) à travers l'épaisseur de la couche fibreuse céramique (34), de la couche intermédiaire (36) et de la couche de mortier de placage (38).

15. Procédé d'isolation d'un tuyau pour le transport de fluide dans un four, qui comprend l'application au tuyau (27, 28) d'une couverture (34) en fibre d'isolation thermique et l'application par-dessus ladite couverture d'une couche de mortier de placage (38), caractérisé en ce que, avant l'application dudit mortier, on enroule un tissu à armure ajourée (36) en fibres d'isolation thermique autour de ladite couverture (34), de sorte que, lors de l'application de ladite couche de mortier (38), le mortier pénètre à travers la couche de tissu (36) dans la couverture (34) de fibres d'isolation thermique.

16. Procédé selon la revendication 15, caractérisé en ce que, pendant que ladite couche de mortier (38) est encore humide, on applique sur elle une couche supplémentaire (40) de fibres d'isolation thermique par-dessus laquelle on applique ensuite une seconde de mortier pour constituer une couche de revêtement de placage de face chaude (42) en tant que surface extérieure du tuyau isolé.

17. Procédé selon la revendication 15 ou 16, caractérisé en ce que le tissu à armure ajourée (36) se présente sous la forme d'anneaux qu'on place autour du tuyau et par-dessus la couverture fibreuse d'isolation thermique (34), ou sous la forme de bandes ou de corde enroulée en hélice autour de ladite couverture (34), les anneaux ou les spires individuelles desdites bandes ou de ladite corde enroulées en hélice étant placées autour de la couverture sous compression axiale l'une contre l'autre.

18. Procédé selon la revendication 16 ou 17, caractérisé en ce que ledit tuyau (27) est un tuyau-glissière (27) comportant une glissière (25) fixée longitudinalement à sa surface et qui est laissée exposée par l'isolation appliquée sur le reste du tuyau, les brèches situées de part et d'autre de la glissière (25) et de l'isolation étant remplies de mortier réfractaire (46).

19. Procédé selon la revendication 18, caractérisé en ce que ledit tuyau (27) est muni d'un ou plusieurs éléments d'ancrage (44) s'étendant radialement à partir de lui qui pénètrent la couverture fibreuse d'isolation thermique (34) et ledit tissu à armure ajourée quand ceux-ci sont enroulés autour d'eux, pour ancrer par là la couverture et le tissu sur le tuyau.

FIG. 1

FIG.2

FIG. 3

FIG. 4